# FASCICULE DE BREVET EUROPEEN

(11) **EP 3 519 257 B1**
(45) Date de publication et mention de la délivrance du brevet: **15.12.2021**
(21) Numéro de dépôt: 17758153.5
(22) Date de dépôt: 28.08.2017
(51) Int. Cl.: B60S 1/38

(54) **PROCÉDÉ DE DÉTERMINATION DE L'USAGE EN BALAYAGE D'UN BALAI D'ESSUIE-GLACE, ET SYSTÈME D'ESSUYAGE**
VERFAHREN ZUR BESTIMMUNG DER WISCHNUTZUNG EINES WISCHBLATTS UND WISCHERANLAGE
PROCES AND SYSTEM FOR DETERMINING THE WEAR OF THE WIPER BLADE SQUEEGEE

(30) Priorité: 28.09.2016 FR 1659189
(43) Date de publication de la demande: 07.08.2019
(73) Titulaire: Valeo Systèmes d'Essuyage, 78322 Le Mesnil Saint Denis (FR)
(72) Inventeur: BILLIAUWS, Stijn, F-93285 Saint-Denis Cedex (FR); COQUET, Damien, F-93285 Saint-Denis Cedex (FR); JOMARD, Olivier, F-63500 Issoire (FR); POTON, Eric, F-63500 Issoire (FR)
(74) Mandataire: Valeo Visibility
(86) Numéro de dépôt international: PCT/EP2017/071525
(87) Numéro de publication internationale: WO 2018/059848

(56) Documents cités:
- EP-A1- 2 524 845
- EP-A1- 2 851 246
- EP-A2- 2 253 520
- WO-A1-86/04554

## Description

### DOMAINE TECHNIQUE DE L'INVENTION

L'invention concerne un procédé de détermination de l'usage en balayage d'un balai d'essuie-glace, notamment en vue de procéder en temps utile à son remplacement par un balai d'essuie-glace neuf, et un système d'essuyage apte à la mise en œuvre d'un tel procédé.

### ARRIERE PLAN TECHNIQUE DE L'INVENTION

Un système d'essuyage d'une vitre telle qu'un pare-brise de véhicule comprend notamment au moins un balai d'essuieglace porté par un porte-balai et un moteur d'entraînement du porte-balai de façon que le balai d'essuie-glace soit entraîné par le porte-balai en essuyage alterné du pare-brise, par exemple selon un mouvement de rotation cyclique, sensiblement en arc de cercle, autour d'un axe de rotation.

Pour pouvoir procéder à différentes opérations de maintenance des balais d'essuie-glace, le porte-balai est déplaçable, en général manuellement, depuis une position d'usage ou d'utilisation, dite « position de service », dans laquelle une lame d'essuyage du balai d'essuie-glace qu'il porte est en contact avec la surface extérieure du pare-brise et est apte à être entraînée par le porte-balai pour essuyer et/ou nettoyer le pare-brise, jusqu'à une position dite « position de maintenance » dans laquelle le balai d'essuie-glace n'est pas en contact avec le pare-brise.

Le porte-balai peut être mis dans sa position de maintenance par exemple pour nettoyer le balai d'essuie-glace, le remplacer en cas d'usure ou le protéger du givre formé sur le pare-brise en hiver.

On connait aussi un type de système d'essuyage dans lequel le porte-balai est dans une position dite de rangement, par exemple sous le capot du véhicule, lorsque le système est inactif.

Dans cette position de rangement, le porte-balai n'est pas accessible et il ne peut pas être amené directement depuis cette position de rangement jusqu'à une position de maintenance.

Une commande spécifique du système, depuis l'habitacle du véhicule, permet de déplacer le porte-balai de sa position de rangement jusqu'à une position intermédiaire dans laquelle il est accessible et le balai d'essuie-glace qu'il porte est en appui sur le pare-brise, comme dans une position de service évoquée précédemment. Le porte-balai peut alors être déplacé manuellement depuis cette position intermédiaire jusqu'à une position de maintenance dans laquelle le balai d'essuie-glace n'est plus en contact avec le pare-brise.

Afin de garantir la plus grande sécurité d'utilisation du véhicule et notamment les meilleures conditions de visibilité à travers la vitre, par exemple à travers le pare-brise, il est nécessaire que chaque balai d'essuie-glace soit remplacé par un nouveau balai d'essuie-glace neuf à l'issue d'une quantité déterminée d'usage en balayage qui, pour un balai d'essuyage neuf, correspond par exemple à un nombre de cycles de balayage.

Il est relativement simple de noter la date de changement des balais d'essuie-glace, puis, à partir d'une période d'installation préconisée par le fabricant, de procéder à leur remplacement par un jeu de balais d'essuie-glace neufs, à l'expiration de cette durée. Toutefois une telle solution n'est pas satisfaisante car elle ne correspond pas à une connaissance réelle de l'usage effectif en balayage du balai d'essuie-glace, qui est le paramètre principal d'usure du balai d'essuie-glace, et notamment de sa lame d'essuyage.

Le document EP2524845A1 décrit un procédé de détermination de l'usage en balayage d'un balai d'essuie-glace comprenant une étape de détermination du remplacement du balai d'essuie-glace par un nouveau balai d'essuie-glace suivi d'une étape d'estimation de l'usage en balayage du nouveau balai d'essuie-glace.

Le document EP2851246A1 décrit l'étape a) du procédé selon l'invention.

A cet effet, l'invention vise notamment à proposer un procédé permettant, de manière fiable, de déterminer l'usage en balayage d'un balai d'essuie-glace neuf.

### BREF RESUME DE L'INVENTION

L'invention propose un procédé de détermination de l'usage en balayage d'un balai d'essuie-glace d'un système d'essuyage d'une vitre de véhicule automobile, en vue de procéder au remplacement de ce balai d'essuie-glace au-delà d'un seuil déterminé d'usage, le système comportant au moins un balai d'essuie-glace porté par un porte-balai qui est déplaçable depuis une position d'usage, dite de service, dans laquelle le balai d'essuie-glace est en contact avec une surface extérieure de la vitre pour en effectuer l'essuyage par balayage alterné, jusqu'à une position dite de maintenance dans laquelle le balai d'essuieglace n'est pas en contact avec ladite surface extérieure de la vitre, procédé caractérisé en ce qu'il comporte successivement :
- une étape a) d'acquisition d'au moins une donnée qui est représentative de la présence du balai d'essuie-glace en position de maintenance ;
- une étape b) de détermination du remplacement du balai d'essuie-glace par un nouveau balai d'essuie-glace ;
- une étape c) d'estimation de l'usage en balayage du nouveau balai d'essuie-glace, l'étape c) d'estimation comportant une sous-étape de comparaison de l'usage en balayage du nouveau balai d'essuie-glace par rapport à une valeur d'un seuil d'usage en balayage.

Selon d'autres caractéristiques du procédé, pouvant être prises seules ou en combinaison :
- ladite valeur de seuil est une valeur déterminée de limite d'usage d'un balai d'essuie-glace neuf ;
- l'étape c) d'estimation est suivie d'une étape d) d'émission d'un signal d'avertissement lorsque l'usage en balayage du nouveau balai d'essuie-glace est supérieur à ladite valeur de seuil d'usage en balayage ;
- ledit signal d'avertissement est un signal d'information en vue du remplacement du nouveau balai d'essuie-glace usagé par un autre nouveau balai ;
- l'étape b) de détermination du remplacement du balai d'essuie-glace par un nouveau balai d'essuie-glace est une étape d'émission d'un message d'interrogation à destination d'un utilisateur du véhicule et/ou d'une personne chargée de la maintenance du balai d'essuie-glace ;
- ledit message est un message demandant à l'utilisateur du véhicule et/ou à la personne chargée de la maintenance du balai d'essuie-glace si il a procédé au remplacement du balai d'essuie-glace par un nouveau balai d'essuie-glace neuf ;
- ledit système comporte au moins un moteur d'entraînement en balayage alterné du support de balai, et l'étape b) de détermination du remplacement du balai d'essuie-glace par un nouveau balai d'essuie-glace est une étape de mesure de la consommation de puissance dudit au moins un moteur lors de l'usage en balayage du balai d'essuie-glace porté par le porte-balai ;
- ladite étape a) d'acquisition d'au moins une donnée représentative de la présence du balai d'essuie-glace en position de maintenance consiste à :
   i) mesurer ou estimer au moins un paramètre pour la détermination de la position de maintenance ou de service ;
   ii) comparer la valeur mesurée ou estimée dudit paramètre avec une valeur de référence ou une plage de valeurs de référence ; et
   iii) déterminer, à partir des résultats de la comparaison, si le porte-balai est en position de maintenance ou de service ;
- ledit paramètre est choisi parmi la consommation électrique d'au moins un moteur d'entraînement en balayage alterné du porte-balai, le couple de sortie dudit moteur, le couple de frottement du balai d'essuie-glace sur la vitre et le coefficient de friction du balai d'essuie-glace sur la vitre ;
- l'étape c) d'estimation de l'usage en balayage du nouveau balai d'essuie-glace est une étape de comptage du nombre de cycles de balayage alterné effectué après ledit remplacement du balai d'essuie-glace par un nouveau balai d'essuie-glace.

L'invention propose aussi un système d'essuyage d'une vitre de véhicule automobile comportant :
- au moins un balai d'essuie-glace porté par un porte-balai qui est déplaçable depuis une position d'usage, dite de service, dans laquelle le balai d'essuie-glace est en contact avec une surface extérieure de la vitre pour en effectuer l'essuyage par balayage alterné, jusqu'à une position dite de maintenance dans laquelle le balai d'essuie-glace n'est pas en contact avec ladite surface extérieure de la vitre ;
- au moins un moteur d'entraînement en balayage alterné du support de balai ;
   caractérisé en ce que le système comporte un dispositif :
- d'acquisition d'au moins une donnée qui est représentative de la présence du balai d'essuie-glace en position de maintenance ;
- de détermination du remplacement du balai d'essuieglace par un nouveau balai d'essuie-glace et de comparaison de l'usage en balayage du nouveau balai d'essuie-glace par rapport à une valeur d'un seuil d'usage en balayage.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique d'un système d'essuyage d'un pare-brise de véhicule dont les balais d'essuie-glace sont représentés dans leur position dite de service ;
- la figure 2 est une vue analogue à celle de la figure 1, dans laquelle les balais d'essuie-glace sont représentés dans leur position dite de maintenance.

### DESCRIPTION DETAILLEE DES FIGURES

Dans la suite de la description, des éléments et composants présentant une structure identique ou des fonctions analogues seront désignés par des mêmes références.

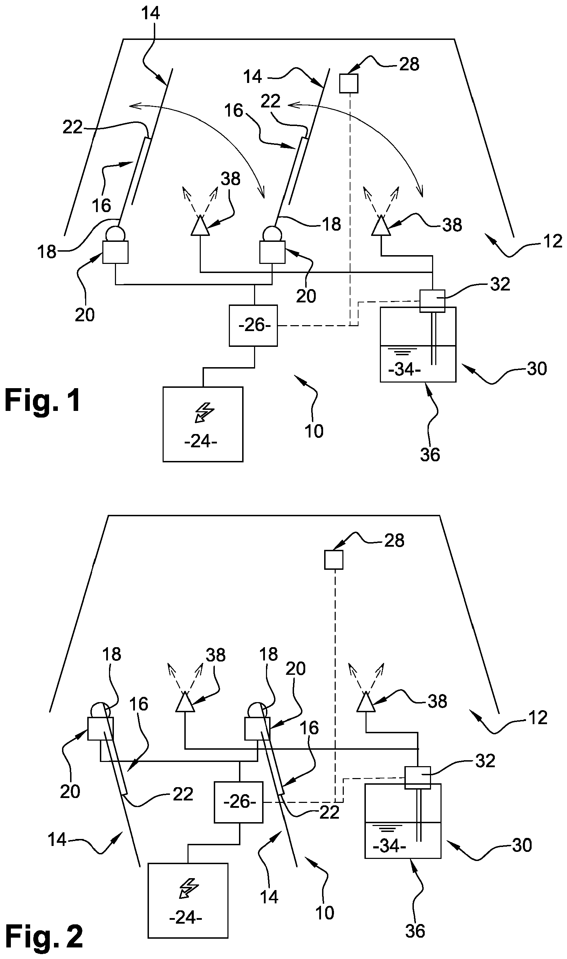

On a représenté en figures 1 et 2, un système 10 d'essuyage d'une vitre 12 d'un véhicule automobile, qui est ici un pare-brise du véhicule.

Le système d'essuyage 10 comprend ici deux balais d'essuie-glace 14. Chaque balai d'essuie-glace 14 est porté par un porte-balai 16 aussi appelé couramment bras d'essuie-glace ou bras d'entraînement.

De manière alternative, non représentée en détail, chaque balai d'essuie-glace 14 comporte au moins une lame d'essuyage qui est une lame souple en matériau élastomère, naturel ou synthétique, dont un bord inférieur d'orientation longitudinale selon la direction générale longitudinale du balai d'essuie-glace 14, coopère avec la surface extérieure du pare-brise 12 pour en assurer le nettoyage et/ou l'essuyage.

Une extrémité proximale 18 chaque porte-balai 16 est reliée à un moteur d'entraînement 20, tandis qu'une extrémité distale 22 de chaque porte-balai 16 est reliée au balai d'essuieglace 14 qu'il porte.

Chaque moteur d'entraînement 20 est conçu pour entraîner le porte-balai 16 en balayage dans un mouvement de pivotement alterné, ou mouvement de rotation cyclique, selon une portion d'arc de cercle, autour d'un axe de pivotement ou de rotation dont l'orientation générale est globalement orthogonale à l'orientation générale longitudinale du porte-balai 16.

Selon une réalisation possible, chaque moteur d'entraînement 20 comporte un arbre de sortie, non représenté, qui transmet au porte-balai 16 associé, un couple d'entraînement, directement ou par exemple par l'intermédiaire d'une tringlerie.

Chaque moteur d'entraînement 20 est par exemple un moteur électrique et les moteurs d'entraînement 20 sont reliés à une source 24 de puissance électrique, tels que par exemple une batterie d'accumulateurs du véhicule, ou un alternateur.

Chaque moteur d'entrainement 20 est relié à la source 24 de puissance électrique par une unité 26 de pilotage et de contrôle du système d'essuyage 10.

L'unité 26 de pilotage et de contrôle est notamment conçue et configurée pour gérer le fonctionnement du système d'essuyage 10 selon plusieurs programmes prédéfinis d'utilisation, par exemple en contrôlant la vitesse d'entraînement en rotation des porte-balai 16 par régulation du courant fourni aux moteurs d'entraînement 20, pour une valeur donnée de la tension d'alimentation des moteurs d'entraînement 20 fournie par la source de puissance électrique 24.

A titre complémentaire et non limitatif, le système d'essuyage 10 comprend encore un capteur 28 de pluie qui est relié à l'unité de pilotage et de contrôle 26.

Le système d'essuyage 10 comprend encore un dispositif 30 de nettoyage de la surface extérieure du pare-brise, qui comporte une pompe 32 qui est reliée à l'unité de pilotage et de contrôle 26 et à la source de puissance électrique 24, et qui est conçue pour prélever du liquide de lave-glace 34 dans un réservoir 36 pour l'acheminer jusqu'à des moyens, de projection du liquide sur la surface extérieure du pare-brise 12, ces moyens de projection étant par exemple des buses 38 agencées sur le capot du véhicule automobile ou bien portées par les balais d'essuie-glace 14 ou bien par les porte-balai 16.

Selon une réalisation possible, chaque porte-balai 16 est susceptible d'occuper une position dite de service ou position d'usage en balayage, dans laquelle le bord d'essuyage de la lame d'essuyage du balai d'essuie-glace est en contact avec la surface extérieure de la vie essuyer, notamment du pare-brise.

Dans la position de service de chaque porte-balai 16, ils peuvent être entraînés en balayage cyclique alterné par les moteurs d'entraînement 20.

Chaque porte-balai 16 est aussi susceptible d'occuper, comme illustré schématiquement à la figure 2, une position dite de maintenance dans laquelle le porte-balai 16, et donc le balai d'essuie-glace 14 qu'il porte, est éloigné de la vitre, c'est-à-dire que la lame d'essuyage n'est plus en contact avec la surface extérieure du pare-brise.

Le changement de position de chaque porte-balai entre sa position d'usage et sa position de maintenance par exemple être effectué manuellement par un utilisateur ou un opérateur, par basculement du porte-balai 16 autour d'un axe généralement globalement orthogonal à l'axe longitudinal du porte-balai 16.

Le déplacement du porte-balai peut aussi être « motorisé » et commandé à partir de l'habitacle du véhicule, comme évoqué dans le préambule, notamment jusqu'à une position intermédiaire.

Lorsqu'un porte-balai 16 est dans sa position de maintenance telle qu'illustrée à la figure 2, il est possible d'accéder notamment au balai d'essuie-glace 14 afin de procéder à une opération d'entretien, telle que par exemple un nettoyage de la lame d'essuyage.

Plus généralement, la mise en position de maintenance d'un porte-balai 16 et de son bras d'essuie-glace 14 associé, a pour but de permettre de procéder à une opération de remplacement du balai d'essuie-glace ou de la lame d'essuyage.

Une telle opération de remplacement s'effectue en démontant le balai d'essuie-glace usagé ou endommagé, puis en montant sur le porte-balai 16 un nouveau balai d'essuie-glace neuf ou une nouvelle lame d'essuyage.

Afin de garantir la plus grande sécurité d'utilisation du véhicule et notamment les meilleures conditions de visibilité à travers la vitre, ici à travers le pare-brise 12, il est nécessaire que chaque balai d'essuie-glace 14 soit remplacé par un nouveau balai d'essuie-glace neuf à l'issue d'une quantité d'utilisation ou d'usage en balayage déterminée qui, pour un balai d'essuyage neuf, correspond par exemple à un nombre de cycles de balayage.

L'invention vise notamment à proposer un procédé permettant, de manière fiable, de déterminer l'usage en balayage d'un balai d'essuie-glace neuf.

Le procédé consiste d'abord à acquérir au moins une donnée qui est représentative de la mise en position du balai d'essuie-glace 14 en position de maintenance, c'est-à-dire ici de la mise en position, comme illustré à la figure 2, du porte-balai 16 associé en position de maintenance.

Cette première étape a) d'estimation est nécessaire afin d'être en mesure de déterminer l'accomplissement d'une opération de changement de balai d'essuie-glace, c'est-à-dire notamment du remplacement d'un balai d'essuie-glace usagé par un nouveau balai d'essuie-glace neuf.

Toutefois, la mise en position de maintenance n'implique pas nécessairement ni une opération de mise en place d'un nouveau balai, ni qu'un nouveau balai mis en place soit un balai neuf.

En effet, par exemple, la mise en position de maintenance peut avoir été suivie d'une simple opération de nettoyage de la lame d'essuyage.

Par ailleurs, par exemple dans le cas d'un système d'essuyage comportant deux balais d'essuie-glace, les opérations de maintenance et d'intervention ont pu n'aboutir qu'au remplacement d'un seul des deux balais d'essuie-glace par un nouveau balai neuf, tandis que l'autre balai d'essuie-glace reste inchangé.

A titre d'exemple non limitatif, l'acquisition de données représentatives de la présence du balai d'essuie-glace en position de maintenance consiste à :
i) mesurer ou estimer au moins un paramètre pour la détermination de la position de maintenance ou de service ;
ii) comparer la valeur mesurée ou estimée dudit paramètre avec une valeur de référence ou une plage de valeurs de référence ; et
iii) déterminer, à partir des résultats de la comparaison, si le porte-balai est en position de maintenance ou de service.

Le paramètre est par exemple choisi parmi la consommation électrique d'au moins un moteur 20 d'entraînement en balayage alterné du porte-balai 16, le couple de sortie du moteur d'entrainement 20, le couple de frottement du balai d'essuie-glace 14 sur le pare-brise 12 et le coefficient de friction du balai d'essuie-glace sur le pare-brise 12.

Conformément au procédé selon l'invention, la première étape a) d'acquisition d'une donnée représentative de la présence du balai d'essuie-glace en position de maintenance, est suivie d'une étape b) visant à déterminer le remplacement d'un balai d'essuie-glace par un nouveau balai d'essuie-glace, notamment par un balai neuf, voire par un nouveau balai dont l'usage préalable en balayage est connu.

Cette étape b) de détermination du remplacement du balai d'essuie-glace par un nouveau balai d'essuie-glace est par exemple une étape d'émission d'un message d'interrogation à destination d'un utilisateur du véhicule et/ou d'une personne chargée de la maintenance du balai d'essuie-glace.

Le message peut par exemple être adressé par affichage sur un écran tactile, par exemple dans l'habitacle du véhicule, posant une ou plusieurs questions relatives aux opérations réellement effectuées suite à la mise en position de maintenance d'un ou de plusieurs balais d'essuie-glace.

Par exemple on demande au conducteur ou à la personne chargée de la maintenance s'il a procédé au remplacement d'un balai d'essuie-glace par un nouveau balai d'essuie-glace neuf, au remplacement de tous les balais d'essuie-glace, etc.

Cette interrogation peut par exemple être effectuée dès le premier démarrage du véhicule suite à l'intervention sur le système d'essuyage.

L'interrogation peut aussi être transmise et affichée sur tout appareil de communication à distance à disposition de l'utilisateur ou d'un service de maintenance.

Dans l'hypothèse dans laquelle la réponse est : « Non le balai d'essuie-glace n'a pas été changé/remplacé », une nouvelle question peut être posée : « Pourquoi n'avez-vous pas changé/remplacé le balai d'essuie-glace ? ».

Pour déterminer si un nouveau balai neuf a été mis en place, on détermine par exemple, directement ou indirectement, le coefficient de friction ou coefficient de frottement du balai d'essuie-glace sur la vitre à essuyer et on le compare soit à une valeur de référence mémorisée, soit à une valeur déterminée précédemment pour le balai d'essuie-glace que l'on vient de démonter pour le remplacer.

A cet effet, l'étape b) de détermination du remplacement du balai d'essuie-glace par un nouveau balai d'essuie-glace est une étape de mesure de la consommation de puissance du moteur électrique d'entrainement lors de l'usage en balayage du balai d'essuie-glace 14 porté par le porte-balai 16.

Ensuite, après la détermination du remplacement effectif du balai d'essuie-glace, le procédé selon l'invention, prévoit une étape c) d'estimation de l'usage en balayage du nouveau balai d'essuie-glace.

Après la mise en place d'un nouveau balai, notamment un balai neuf, une telle étape d'estimation permet de déterminer de manière fiable l'usage réel effectif en balayage, ou une estimation de cet usage, du nouveau balai, notamment en vue de déterminer dans le futur la nécessité de procéder à son remplacement à nouveau.

Selon un aspect de l'invention, l'étape c) d'estimation comporte une comparaison de l'usage en balayage du nouveau balai d'essuie-glace par rapport à une valeur d'un seuil d'usage en balayage. Une telle valeur de seuil d'usage est par exemple une valeur déterminée de limite d'usage en balayage d'un balai d'essuie-glace neuf. Cette valeur est par exemple un nombre total de cycles comptés à partir de la première mise en marche du système d'essuyage après le retour du ou des porte-balai en position dite de service.

Lorsque la valeur de seuil prédéterminée est atteinte ou dépassée, le procédé comporte une étape d) d'émission d'un signal d'avertissement.

Par exemple, le signal d'avertissement est un signal d'information à destination du propriétaire ou de l'utilisateur du véhicule, ou encore à destination du réseau de succursales de maintenance et d'entretien du constructeur du véhicule, en vue du remplacement du ou des balais d'essuie-glace usagés par des balais d'essuie-glace neufs.

Le signal d'avertissement peut par exemple être affiché dans l'habitacle du véhicule lors du démarrage du véhicule.

L'affichage et/ou la transmission du signal d'avertissement peuvent être réitérés régulièrement, par exemple sur une base régulière, jusqu'à ce le procédé détermine qu'un remplacement des balais d'essuie-glace a été effectué, notamment par mise en œuvre des étapes a) et b) du procédé.

Le signal d'avertissement peut aussi être transmis et affiché sur tout appareil de communication à distance à disposition de l'utilisateur ou d'un service de maintenance.

Le signal d'avertissement peut aussi comporter des informations techniques et commerciales complémentaires relatives notamment au modèle, type et référence de balai d'essuie-glace neuf à utiliser, notamment dans la mesure où le procédé prévoit l'utilisation de valeur(s) de seuil(s) directement liée(s) au modèle, type et référence de balai d'essuie-glace neuf préconisé pour son montage sur le véhicule.

## Revendications

1. Procédé de détermination de l'usage en balayage d'un balai d'essuie-glace (14) d'un système (10) d'essuyage d'une vitre (12) de véhicule automobile, en vue de procéder au remplacement de ce balai d'essuie-glace au-delà d'un seuil déterminé d'usage, le système comportant au moins un balai d'essuie-glace (14) porté par un porte-balai (16) qui est déplaçable depuis une position d'usage, dite de service, dans laquelle le balai d'essuieglace (14) est en contact avec une surface extérieure de la vitre (12) pour en effectuer l'essuyage par balayage alterné, jusqu'à une position dite de maintenance dans laquelle le balai d'essuieglace (14) n'est pas en contact avec ladite surface extérieure de la vitre (12), procédé **caractérisé en ce qu'**il comporte successivement :
- une étape a) d'acquisition d'au moins une donnée qui est représentative de la présence du balai d'essuie-glace (14) en position de maintenance ;
- une étape b) de détermination du remplacement du balai d'essuie-glace par un nouveau balai d'essuie-glace ;
- une étape c) d'estimation de l'usage en balayage du nouveau balai d'essuie-glace, l'étape c) d'estimation comportant une sous-étape de comparaison de l'usage en balayage du nouveau balai d'essuie-glace par rapport à une valeur d'un seuil d'usage en balayage.

2. Procédé selon la revendication 1, **caractérisé en ce que** ladite valeur de seuil est une valeur déterminée de limite d'usage d'un balai d'essuie-glace neuf.

3. Procédé selon l'une quelconque des revendications 1 ou 2, **caractérisé en ce que** l'étape c) d'estimation est suivie d'une étape d) d'émission d'un signal d'avertissement lorsque l'usage en balayage du nouveau balai d'essuie-glace est supérieur à ladite valeur de seuil d'usage en balayage.

4. Procédé selon la revendication 3, **caractérisé en ce que** ledit signal d'avertissement est un signal d'information en vue du remplacement du nouveau balai d'essuie-glace usagé par un autre nouveau balai.

5. Procédé selon la revendication 1, **caractérisé en ce que** l'étape b) de détermination du remplacement du balai d'essuieglace par un nouveau balai d'essuie-glace est une étape d'émission d'un message d'interrogation à destination d'un utilisateur du véhicule et/ou d'une personne chargée de la maintenance du balai d'essuie-glace.

6. Procédé selon la revendication 5, **caractérisé en ce que** ledit message est un message demandant à l'utilisateur du véhicule et/ou à la personne chargée de la maintenance du balai d'essuie-glace s'il a procédé au remplacement du balai d'essuieglace par un nouveau balai d'essuie-glace neuf.

7. Procédé selon la revendication 1 de détermination de l'usage en balayage d'un balai d'essuie-glace d'un système d'essuie-glace d'une vitre de véhicule automobile en vue de procéder au remplacement de ce balai d'essuie-glace au-delà d'un seuil déterminé d'utilisation,
dans lequel ledit système comporte au moins un moteur (20) d'entraînement en balayage alterné du support de balai, **caractérisé en ce que** l'étape b) de détermination du remplacement du balai d'essuie-glace par un nouveau balai d'essuie-glace est une étape de mesure de la consommation de puissance dudit au moins un moteur lors de l'usage en balayage du balai d'essuie-glace porté par le porte-balai.

8. Procédé selon la revendication 1, **caractérisé en ce que** ladite étape a) d'acquisition d'au moins une donnée représentative de la présence du balai d'essuie-glace en position de maintenance consiste à :
i) mesurer ou estimer au moins un paramètre pour la détermination de la position de maintenance ou de service ;
ii) comparer la valeur mesurée ou estimée dudit paramètre avec une valeur de référence ou une plage de valeurs de référence ; et
iii) déterminer, à partir des résultats de la comparaison, si le porte-balai est en position de maintenance ou de service.

9. Procédé selon la revendication 8, dans lequel ledit paramètre est choisi parmi la consommation électrique d'au moins un moteur d'entraînement en balayage alterné du porte-balai, le couple de sortie dudit moteur, le couple de frottement du balai d'essuie-glace sur la vitre et le coefficient de friction du balai d'essuie-glace sur la vitre.

10. Procédé selon la revendication 1, **caractérisé en ce que** l'étape c) d'estimation de l'usage en balayage du nouveau balai d'essuie-glace est une étape de comptage du nombre de cycles de balayage alterné effectué après ledit remplacement du balai d'essuie-glace par un nouveau balai d'essuie-glace.

11. Système (10) d'essuyage d'une vitre de véhicule automobile comportant :
- au moins un balai d'essuie-glace (14) porté par un porte-balai (16) qui est déplaçable depuis une position d'usage, dite de service, dans laquelle le balai d'essuie-glace (14) est en contact avec une surface extérieure de la vitre (12) pour en effectuer l'essuyage par balayage alterné, jusqu'à une position dite de maintenance dans laquelle le balai d'essuie-glace (14) n'est pas en contact avec ladite surface extérieure de la vitre (12) ;
- au moins un moteur (20) d'entraînement en balayage alterné du support de balai (16) ;
**caractérisé en ce que** le système comporte un dispositif :
- d'acquisition d'au moins une donnée qui est représentative de la présence du balai d'essuie-glace (14) en position de maintenance ;
- de détermination du remplacement du balai d'essuieglace (14) par un nouveau balai d'essuie-glace ;
- et d'estimation de l'usage en balayage du nouveau balai d'essuie-glace et de comparaison de l'usage en balayage du nouveau balai d'essuie-glace par rapport à une valeur d'un seuil d'usage en balayage.

## Patentansprüche

1. Verfahren zur Bestimmung der Wischnutzung eines Wischblatts (14) einer Wischeranlage (10) für eine Scheibe (12) eines Kraftfahrzeugs, um oberhalb einer bestimmten Nutzungsschwelle den Austausch dieses Wischblatts vorzunehmen, wobei die Anlage mindestens ein Wischblatt (14) umfasst, das von einem Wischarm (16) getragen wird, der von einer Nutzungsposition, als Betriebsposition bezeichnet, in der das Wischblatt (14) mit einer Außenfläche der Scheibe (12) in Kontakt ist, um das Wischen durch alternierendes Wischen durchzuführen, in eine sogenannte Wartungsposition, in der das Wischblatt (14) nicht mit der Außenfläche der Scheibe (12) in Kontakt ist, bewegbar ist, wobei das Verfahren **dadurch gekennzeichnet ist, dass** es nacheinander Folgendes umfasst:
- einen Schritt a) des Erfassens mindestens eines Datenelements, das für das Vorhandensein des Wischblatts (14) in der Wartungsposition repräsentativ ist;
- einen Schritt b) des Bestimmens des Austausches des Wischblatts durch ein neues Wischblatt;
- einen Schritt c) des Ermittelns der Wischnutzung des neuen Wischblatts, wobei der Ermittlungsschritt c) einen Unterschritt des Vergleichens der Wischnutzung des neuen Wischblatts mit einem Wert einer Wischnutzungsschwelle umfasst.

2. Verfahren nach Anspruch 1, **dadurch gekennzeichnet, dass** der Schwellenwert ein bestimmter Wert einer Nutzungsgrenze eines ungebrauchten Wischblatts ist.

3. Verfahren nach einem der Ansprüche 1 oder 2, **dadurch gekennzeichnet, dass** dem Ermittlungsschritt c) ein Schritt d) der Ausgabe eines Warnsignals folgt, wenn die Wischnutzung des neuen Wischblatts größer als der Wischnutzungsschwellenwert ist.

4. Verfahren nach Anspruch 3, **dadurch gekennzeichnet, dass** das Warnsignal ein Informationssignal im Hinblick auf den Austausch des abgenutzten neuen Wischblatts durch ein anderes neues Wischblatt ist.

5. Verfahren nach Anspruch 1, **dadurch gekennzeichnet, dass** der Schritt b) des Bestimmens des Austausches des Wischblatts durch ein neues Wischblatt ein Schritt des Ausgebens einer Abfragemeldung an einen Benutzer des Fahrzeugs und/oder eine mit der Wartung des Wischblatts beauftragte Person ist.

6. Verfahren nach Anspruch 5, **dadurch gekennzeichnet, dass** die Meldung eine Meldung ist, die den Benutzer des Fahrzeugs und/oder die mit der Wartung des Wischblatts beauftragte Person fragt, ob der Austausch des Wischblatts durch ein neues ungebrauchtes Wischblatt vorgenommen wurde.

7. Verfahren nach Anspruch 1 zur Bestimmung der Wischnutzung eines Wischblatts einer Wischeranlage für eine Scheibe eines Kraftfahrzeugs, um oberhalb einer bestimmten Benutzungsschwelle den Austausch dieses Wischblatts vorzunehmen,
wobei die Anlage mindestens einen Antriebsmotor (20) für alternierendes Wischen mit dem Wischhalter umfasst, **dadurch gekennzeichnet, dass** der Schritt b) des Bestimmens des Austausches des Wischblatts durch eine neues Wischblatt ein Schritt des Messens des Leistungsverbrauchs des mindestens einen Motors während der Wischnutzung des durch den Wischarm getragenen Wischblatts ist.

8. Verfahren nach Anspruch 1, **dadurch gekennzeichnet, dass** der Schritt a) des Erfassens mindestens eines Datenelements, das für das Vorhandensein des Wischblatts in der Wartungsposition repräsentativ ist, aus Folgendem besteht:
i) Messen oder Ermitteln mindestens eines Parameters für die Bestimmung der Wartungs- oder der Betriebsposition;
ii) Vergleichen des gemessenen oder ermittelten Werts des Parameters mit einem Referenzwert oder einem Referenzwertebereich; und
iii) Bestimmen, auf Grundlage der Ergebnisse des Vergleichs, ob sich der Wischarm in der Wartungs- oder der Betriebsposition befindet.

9. Verfahren nach Anspruch 8, wobei der Parameter aus Folgendem ausgewählt wird: dem Stromverbrauch mindestens eines Antriebsmotors für alternierendes Wischen mit dem Wischarm, dem Ausgangsdrehmoment des Motors, dem Reibungsdrehmoment des Wischblatts auf der Scheibe und dem Reibkoeffizienten des Wischblatts auf der Scheibe.

10. Verfahren nach Anspruch 1, **dadurch gekennzeichnet, dass** der Schritt c) des Ermittelns der Wischnutzung des neuen Wischblatts ein Schritt des Zählens der Anzahl von alternierenden Wischzyklen ist, die nach dem Austausch des Wischblatts durch ein neues Wischblatt durchgeführt wurden.

11. Wischeranlage (10) für eine Scheibe eines Kraftfahrzeugs, die Folgendes umfasst:
- mindestens ein Wischblatt (14), das von einem Wischarm (16) getragen wird, der von einer Nutzungsposition, als Betriebsposition bezeichnet, in der das Wischblatt (14) mit einer Außenfläche der Scheibe (12) in Kontakt ist, um das Wischen durch alternierendes Wischen durchzuführen, in eine sogenannte Wartungsposition, in der das Wischblatt (14) nicht mit der Außenfläche der Scheibe (12) in Kontakt ist, bewegbar ist;
- mindestens einen Antriebsmotor (20) für alternierendes Wischen mit dem Wischhalter (16);
**dadurch gekennzeichnet, dass** die Anlage eine Vorrichtung für Folgendes umfasst:
- das Erfassen mindestens eines Datenelements, das für das Vorhandensein des Wischblatts (14) in der Wartungsposition repräsentativ ist;
- das Bestimmen des Austausches des Wischblatts (14) durch ein neues Wischblatt;
- und das Ermitteln der Wischnutzung des neuen Wischblatts, und Vergleichen der Wischnutzung des neuen Wischblatts mit einem Wert einer Wischnutzungsschwelle.

## Claims

1. A method for determining the wiping use of a wiper (14) of a wiping system (10) for a motor vehicle window (12), with a view to replacing this wiper once it exceeds a determined use threshold, the system comprising at least one wiper (14) carried by a wiper carrier (16) which is movable from a use position, termed service position, in which the wiper (14) is in contact with an outer surface of the window (12) in order to carry out wiping thereof by sweeping back and forth, to a position, termed maintenance position, in which the wiper (14) is not in contact with said outer surface of the window (12), which method is **characterized in that** it successively comprises:
- a step a) of acquiring at least one data item which is representative of the presence of the wiper (14) in the maintenance position;
- a step b) of determining the replacement of the wiper with a new wiper;
- a step c) of estimating the wiping use of the new wiper, the estimating step c) comprises a substep of comparing the wiping use of the new wiper with respect to a value of a wiping use threshold.

2. The method as claimed in claim 1, **characterized in that** said threshold value is a determined use limit value of a fresh wiper.

3. The method as claimed in either one of claims 1 or 2, **characterized in that** the estimating step c) is followed by a step d) of emitting a warning signal when the wiping use of the new wiper is above said wiping use threshold.

4. The method as claimed in claim 3, **characterized in that** said warning signal is an information signal with a view to replacing the used new wiper with another new wiper.

5. The method as claimed in claim 1, **characterized in that** the step b) of determining the replacement of the wiper with a new wiper is a step of emitting an interrogation message destined for a user of the vehicle and/or for a person tasked with the maintenance of the wiper.

6. The method as claimed in claim 5, **characterized in that** said message is a message asking the user of the vehicle and/or the person tasked with the maintenance of the wiper if he or she has replaced the wiper with a fresh new wiper.

7. The method as claimed in claim 1 for determining the wiping use of a wiper of a wiping system for a motor vehicle window with a view to replacing this wiper once it exceeds a determined use threshold,
in which said system comprises at least one motor (20) for driving the wiper support to sweep back and forth,
**characterized in that** the step b) of determining the replacement of the wiper with a new wiper is a step of measuring the power consumption of said at least one motor during the wiping use of the wiper carried by the wiper carrier.

8. The method as claimed in claim 1, **characterized in that** said step a) of acquiring at least one data item representative of the presence of the wiper in the maintenance position consists in:
i) measuring or estimating at least one parameter for determining the maintenance position or service position;
ii) comparing the measured or estimated value of said parameter with a reference value or a range of reference values; and
iii) determining, from the results of the comparison, if the wiper carrier is in the maintenance or service position.

9. The method as claimed in claim 8, in which said parameter is chosen from the electrical consumption of at least one motor for driving the wiper carrier to sweep back and forth, the output torque of said motor, the frictional torque of the wiper on the window and the coefficient of friction of the wiper on the window.

10. The method as claimed in claim 1, **characterized in that** the step c) of estimating the wiping use of the new wiper is a step of counting the number of back-and-forth sweeping cycles carried out after said replacement of the wiper with a new wiper.

11. A wiping system (10) for a motor vehicle window, comprising:
- at least one wiper (14) carried by a wiper carrier (16) which is movable from a use position, termed service position, in which the wiper (14) is in contact with an outer surface of the window (12) in order to carry out wiping thereof by sweeping back and forth, to a position, termed maintenance position, in which the wiper (14) is not in contact with said outer surface of the window (12);
- at least one motor (20) for driving the wiper support (16) to sweep back and forth;
**characterized in that** the system comprises a device:
- for acquiring at least one data item which is representative of the presence of the wiper (14) in the maintenance position;
- for determining the replacement of the wiper (14) with a new wiper;
- and for estimating the wiping use of the new wiper and for comparing the wiping use of the new wiper with respect to a value of a wiping use threshold.
